Europäisches Patentamt

European Patent Office

Office européen des brevets

(19)

(11) Numéro de publication : **0 125 186 B1**

(12)
# FASCICULE DE BREVET EUROPÉEN

(45) Date de publication du fascicule du brevet :
**15.04.87**

(21) Numéro de dépôt : **84400924.1**

(22) Date de dépôt : **04.05.84**

(51) Int. Cl.⁴ : **G 02 B 23/08, F 22 B 37/00**

(54) **Dispositif d'observation de la plaque tubulaire d'un générateur de vapeur.**

(30) Priorité : **04.05.83 FR 8307459**

(43) Date de publication de la demande :
**14.11.84 Bulletin 84/46**

(45) Mention de la délivrance du brevet :
**15.04.87 Bulletin 87/16**

(84) Etats contractants désignés :
**BE CH DE GB IT LI NL SE**

(56) Documents cités :
**EP-A- 0 050 922
EP-A- 0 077 255
DE-A- 2 232 582
US-A- 3 880 148**

(73) Titulaire : **ELECTRICITE DE FRANCE Service National
2, rue Louis Murat
F-75008 Paris (FR)**

(72) Inventeur : **Denis, Jean
Chemin des Sablons Le Mesnil le Roi
F-78600 Maisons Laffitte (FR)**
Inventeur : **Poirier, Pierre
27, rue Jean Jaurès
F-93240 Stains (FR)**

(74) Mandataire : **Fort, Jacques et al
CABINET PLASSERAUD 84, rue d'Amsterdam
F-75009 Paris (FR)**

## Description

L'invention a pour objet un dispositif d'observation de la plaque tubulaire d'un générateur de vapeur comportant des nappes de tubes parallèles situées dans une enceinte munie d'au moins un accès situé face à l'intervalle entre deux nappes adjacentes, dispositif du type comprenant une perche de dimension transversale inférieure à l'intervalle, insérable par l'accès, contenant un guide de lumière et un endoscope et terminée par une tête munie de moyens déflecteurs orientables associés à l'endoscope et au guide pour permettre d'éclairer et observer une même zone de la plaque.

L'invention trouve une application particulièrement importante, bien que non exclusive, constituée par l'examen visuel de la plaque tubulaire des générateurs de vapeur utilisés dans les centrales nucléaires à eau légère sous pression. La sécurité d'exploitation de la centrale exige d'éviter tout passage de fluide primaire, qui parcourt les tubes, dans le fluide secondaire, qui parcourt l'espace compris entre ces tubes et l'enveloppe du générateur de vapeur. L'observation de la plaque tubulaire du côté secondaire du générateur de vapeur fournit des indications utiles à l'exploitation et à la sécurité et permet en particulier d'évaluer l'état de la base des tubes du faisceau parcouru par le fluide primaire, la nature, la coloration et la localisation des oxydes et des dépôts de boue, et la présence d'éventuels corps étrangers.

Pour effectuer cette observation, on a déjà réalisé des dispositifs d'observation du genre ci-dessus défini. Dans un type de générateur de vapeur fréquemment utilisé dans les centrales nucléaires, l'enceinte est munie de divers accès dont certains, couramment dénommés «trous d'œil» sont placés à faible distance de la plaque tubulaire, face à l'intervalle qui sépare deux nappes de tubes. La perche du dispositif d'observation peut être introduite par ce trou d'œil, entre deux nappes de tubes adjacentes, ce qui permet d'effectuer l'observation à distance et, donc, d'éviter d'exposer les opérateurs aux rayonnements. La perche est arrêtée dans des positions successives pour lesquelles les moyens déflecteurs de la tête sont situés entre deux rangées adjacentes de tubes et l'observation s'effectue pendant le balayage.

Mais, du fait du faible écartement de deux rangées adjacentes de tubes, il est impossible d'aligner, dans la direction d'insertion, les moyens déflecteurs de l'endoscope et du guide de lumière. Pour conserver néanmoins la possibilité d'effectuer une observation directement sous l'endoscope, on a proposé de placer les moyens déflecteurs orientables du guide de lumière à l'extrémité d'un tube de renvoi latéral. Mais cette solution présente des inconvénients sérieux. Le tube de renvoi latéral doit être ramené en position verticale pour autoriser le déplacement de la perche et tout oubli risque de provoquer une détérioration du dispositif, voire même une chute dans le générateur de vapeur de la partie proéminente ; il n'est pas possible d'observer des deux côtés de la perche avec le même instrument.

La présente invention vise à fournir un dispositif d'observation répondant mieux que ceux antérieurement connus aux exigences de la pratique, notamment en ce qu'il rend possible d'observer la plaque tubulaire des deux côtés de la perche tout en évitant la présence d'organes débordant de l'intervalle de circulation.

Dans ce but, l'invention propose un dispositif du type ci-dessus défini dont les moyens déflecteurs sont disposés dans l'épaisseur de la perche, sensiblement l'un au-dessus de l'autre, les moyens déflecteurs du guide étant plus éloignés de la plaque que les moyens déflecteurs de l'endoscope et étant complétés par un guide fixe d'éclairage de la zone de la plaque pour laquelle le faisceau de lumière provenant des moyens déflecteurs du guide de lumière est occulté par les moyens déflecteurs de l'endoscope.

L'invention sera mieux comprise à la lecture de la description qui suit d'un mode particulier d'exécution de l'invention et de la comparaison qui en est faite avec un dispositif suivant l'art antérieur. La description se réfère aux dessins qui l'accompagnent, dans lesquels :

la Figure 1 est un schéma de principe, en perspective, montrant la tête d'un dispositif suivant l'art antérieur,

la Figure 2 est une vue d'ensemble, en perspective, montrant la constitution générale du dispositif,

les Figures 3 et 4 sont des vues en perspective montrant la constitution de la perche insérable dans l'échangeur.

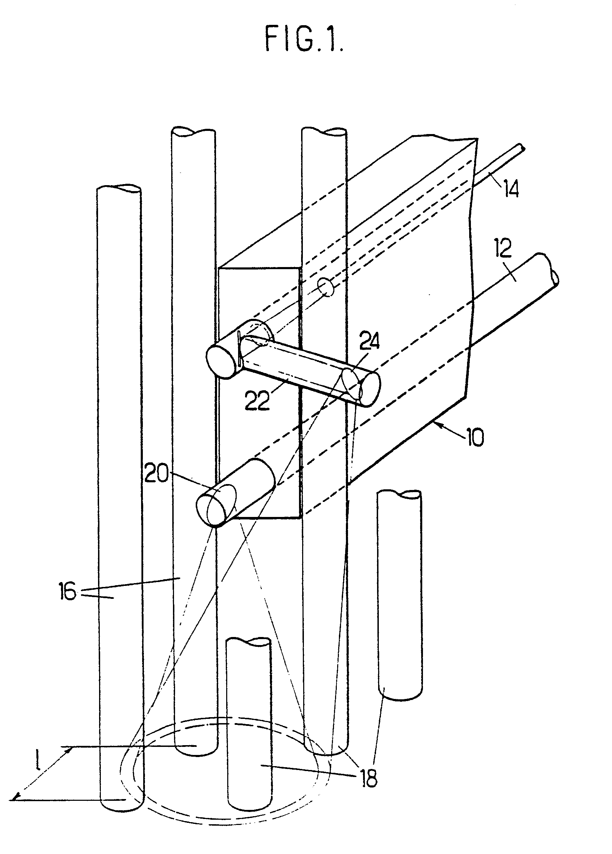

Le dispositif suivant l'art antérieur dont la partie terminale est montrée en Figure 1 comporte une perche 10 rigide en forme de règle à section rectangulaire, dans laquelle est disposé un endoscope rigide 12 et, immédiatement au-dessus, un guide optique 14 constitué par une fibre. L'endoscope 12 et la fibre 14 coopèrent respectivement avec un oculaire ou une caméra vidéo et avec une source d'éclairage (non représentées).

La perche 10 est prévue pour être insérée dans l'enceinte d'un générateur de vapeur, par un trou d'œil, entre deux nappes adjacentes de tubes 16 et 18. Pour cela, la largeur de la perche ne doit pas dépasser la dimension de l'intervalle entre les tubes adjacents. Un dispositif représentatif fait dans ce but usage d'une perche en forme de règle ayant une largeur de 8 mm et une hauteur de 30 mm. L'endoscope 12 se termine par des moyens déflecteurs formés par un miroir 20 orientable autour de l'axe de l'endoscope, placé dans la partie basse de la perche 10. Lorsque la perche est arrêtée dans une position pour laquelle le miroir se trouve face à l'espace, de largeur l, entre deux tubes adjacents successifs, la rotation de l'endoscope permet d'observer successivement toutes les parties de la plaque dans une zone transversale à la perche, à condition que cette zone soit éclairée. Or, l'écartement entre tubes d'échange de chaleur adjacents est trop faible pour qu'il soit possible de disposer les moyens déflecteurs de l'endoscope et du guide de lumière dans le prolongement l'un de l'autre. Ces moyens sont donc superposés. Pour éviter la zone d'ombre de la partie terminale de l'endoscope lors d'une observation verticale, les moyens déflecteurs du guide de lumière comprennent un tube de renvoi latéral 22 comportant un miroir 24.

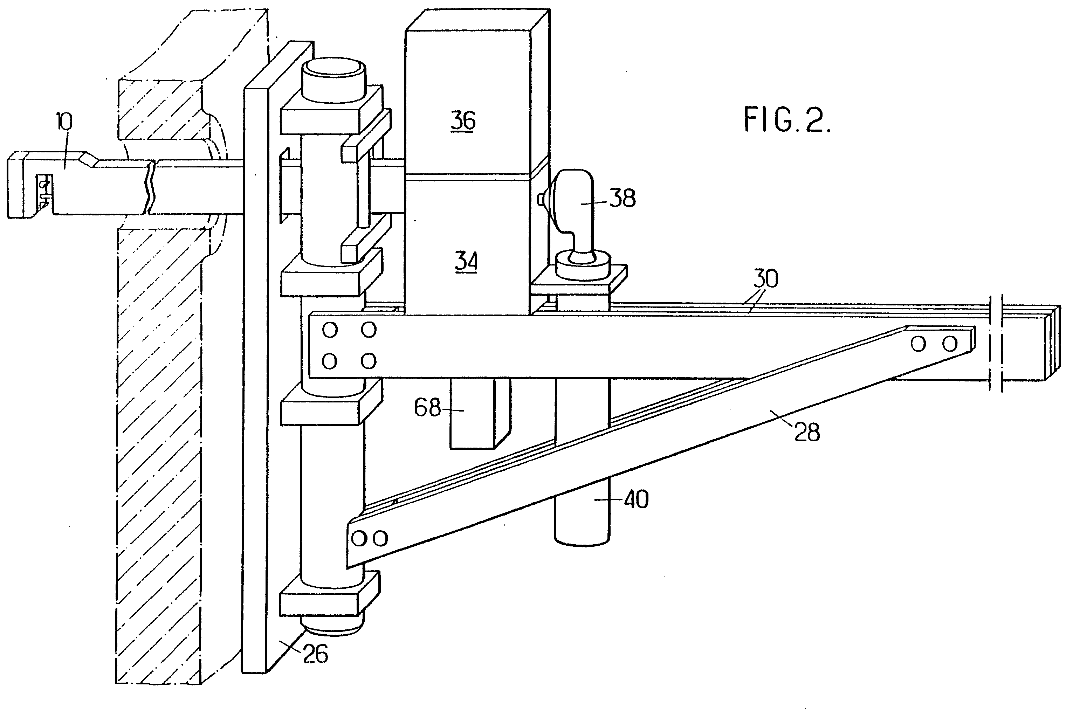

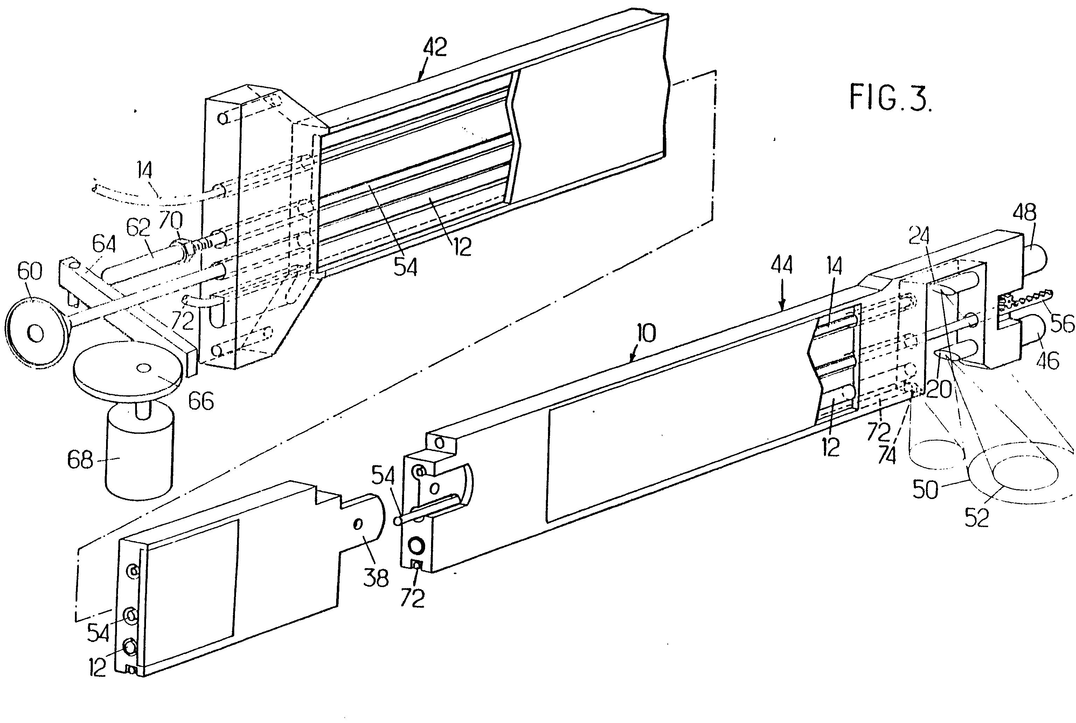

Comme on l'a indiqué plus haut, cette solution présente des inconvénients, qui sont écartés dans le cas de l'invention, qu'on décrira maintenant en faisant référence aux figures 2 et 3 où les organes correspondant à ceux de la figure 1 sont désignés par le même numéro de référence.

La perche 10, encore en forme de règle, est constituée en plusieurs pièces assemblées, comme on le verra en détail plus loin. Les déplacements de la règle sont commandés par un mécanisme placé à l'extérieur de l'enceinte du générateur de vapeur, entre l'enceinte de ce générateur et la casemate de protection dans le cas d'une centrale nucléaire. Ce mécanisme comprend une embase 26 sur laquelle est montée une potence 28 munie, à sa partie supérieure, de rails horizontaux de guidage 30. Un moteur d'entraînement actionne, par l'intermédiaire d'un mécanisme de transmission sous boîtier 34, qui peut être de type classique, des galets d'entraînement d'un équipage mobile le long des rails 30. L'équipage mobile comporte, en plus du boîtier 34, du moteur et de la perche 10, un ensemble d'éclairage comportant une boîte à lumière 36 munie d'une source telle qu'une lampe à arc, et un organe de liaison optique 38. Dans le cas illustré, cet organe 38 est un adaptateur de liaison avec une caméra vidéo 40. Dans d'autres cas, il peut être constitué par un oculaire d'observation visuelle directe.

La perche 10 proprement dite (Figure 3) comporte une partie arrière 42 et une partie avant 44 raccordées l'une à l'autre par des moyens de jonction assurant la continuité des chemins optiques. Plusieurs parties avant de longueur différente peuvent être prévues. Il est ainsi possible d'explorer un générateur de vapeur depuis l'enveloppe jusqu'au centre bien que l'espace disponible entre l'enveloppe et la casemate qui l'entoure soit réduit. La partie arrière est portée par le boîtier de mécanisme 34. La partie avant se termine par une tête d'exploration munie de moyens déflecteurs de balayage.

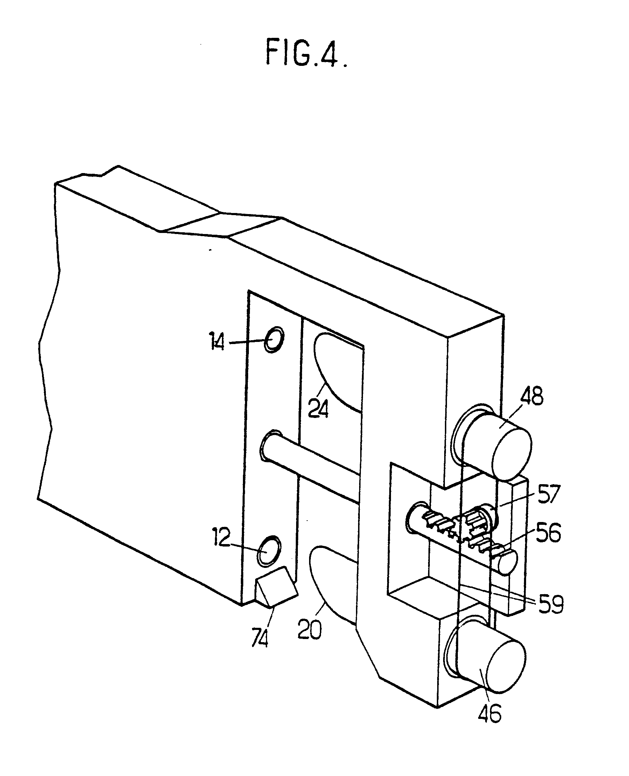

Dans la tête du dispositif suivant l'invention, où les organes correspondant à ceux de la Figure 1 sont désignés par le même numéro de référence, on retrouve un endoscope 12 et une fibre d'éclairage 14. associés chacun à un miroir de renvoi 20 ou 24. La tête est en forme de U à ouverture dirigée vers le bas et le miroir 20 de l'endoscope est porté par un tambour 46 monté de façon à pouvoir tourner dans la branche du U éloignée de l'endoscope, autour d'un axe parallèle à l'axe de la règle 10. Pour éviter la présence d'un tube de renvoi, le miroir 24 associé au guide optique 14 est placé au-dessus du miroir 20. Un mécanisme traversant la règle 10 permet de commander simultanément les deux tambours 46 et 48 de façon qu'il y ait recouvrement de la zone éclairée 50 et de la zone 52 vue par l'endoscope. Dans le mode de réalisation montré en Figure 3, ce mécanisme comporte une tringle longitudinale coulissante 54 terminée par une crémaillère 56 d'entraînement d'une pignonnerie de couplage avec les tambours 46 et 48, par exemple à tambour 57 et courroie 59 (Figure 4).

La tige 54 est constituée en deux tronçons. Le tronçon avant, qui traverse la partie 44, fait saillie à l'arrière de celle-ci pour venir en butée contre un tronçon contenu dans la partie arrière 42.

Cette partie arrière 42, prévue pour être raccordée à la partie avant 44 par une languette 38 s'engageant dans une mortaise de forme correspondante et par des vis, contient la partie arrière de l'endoscope 12, du guide optique 14 et de la tige 54. Dans le mode de réalisation montré en Figure 3, l'endoscope se termine par un simple oculaire de vision 60. L'extrémité de la tige 54 fait saillie à l'arrière de la partie 42 et se termine par un téton 62 qu'un ressort de rappel (non représenté) tend à appuyer contre un levier basculant 64 qu'une came 66, actionnée par un moteur 68, permet d'avancer. Un écrou 70 peut être prévu pour constituer une butée ajustable, limitant les déplacements de la crémaillère.

Etant donné que le tambour 46 et le miroir 20 de l'endoscope occultent le faisceau lumineux fourni par le miroir 24 lors d'une observation à la verticale de la règle, cette dernière contient des moyens d'éclairage fixes de la zone occultée. Ces moyens sont constitués par un guide de lumière 72 prévu à la partie basse de la règle, munis d'un miroir terminal 74 de renvoi de lumière. Ce second guide peut être alimenté par la même source de lumière 36 que le premier, éventuellement en alternance avec lui.

A titre d'exemple de mise en œuvre, on peut indiquer qu'un dispositif utilisé pour l'examen de la plaque tubulaire des générateurs de vapeur de centrale nucléaire comporte une perche ayant une partie arrière d'environ 1 m de long et deux parties avant utilisables en alternance, l'une de 30 cm et l'autre de 1 m. La largeur de la perche est de 7 à 8 mm, c'est-à-dire telle que la perche puisse s'insérer sans difficulté entre deux nappes adjacentes de tubes. La hauteur de 30 mm permet d'obtenir une rigidité suffisante. Les guides optiques sont constitués par des fibres. L'endoscope est constitué par un tube contenant l'optique. glissé dans la perche.

Le fonctionnement du dispositif ressort de la description qui précède et il suffit donc de l'envisager brièvement. On introduit la perche dans l'un des trous d'œil du générateur de vapeur. entre deux nappes de tubes adjacentes et on l'immobilise dans une position pour laquelle les miroirs 24 et 20 se trouvent dans l'intervalle entre deux rangées adjacentes. Par rotation du miroir, on peut observer les pieds de tubes et la plaque sur toute la rangée. Il faut cependant noter au passage que l'angle de vision de l'endoscope sera toujours réduit, d'environ 10° en général, de sorte qu'il faut maintenir une précision élevée dans la synchronisation des miroirs 20 et 24. Une fois une rangée étudiée, on avance la perche d'une distance égale à un pas entre deux nappes et on reproduit les opérations.

L'ensemble des opérations peut être commandé à distance, de façon à réduire l'irradiation subie par les opérateurs, les déplacements étant reproduits sur un schéma synoptique.

### Revendications

1. Dispositif d'observation de la plaque tubulaire d'un générateur de vapeur comportant des nappes de tubes parallèles (16, 18) situées dans une enceinte munie d'au moins un accès situé face à l'intervalle entre deux nappes adjacentes, dispositif comprenant une perche (10) de dimension transversale inférieure à l'intervalle, insérable par l'accès, contenant un guide de lumière (14) et un endoscope (12) et terminée par une tête munie de moyens déflecteurs orientables associés à l'endoscope et au guide pour permettre d'éclairer et d'observer une même zone de la plaque, caractérisé en ce que les moyens déflecteurs (20, 24) sont disposés dans l'épaisseur de la perche, sensiblement l'un au-dessus de l'autre, les moyens déflecteurs du guide étant plus éloignés de la plaque que les moyens déflecteurs de l'endoscope et étant complétés par un guide fixe (72, 74) d'éclairage de la zone de la plaque pour laquelle le faisceau de lumière provenant des moyens déflecteurs (24) du guide de lumière est occulté par les moyens déflecteurs (20) de l'endoscope (12).

2. Dispositif selon la revendication 1, caractérisé en ce que les moyens déflecteurs (20, 24) sont constitués par des miroirs portés par des tambours rotatifs dans la perche autour d'axes parallèles, entraînés simultanément en rotation par des moyens de commande traversant la perche.

3. Dispositif selon la revendication 2, caractérisé en ce que les moyens de commande comportent une tige montée coulissante dans la perche, faisant saillie hors de la perche à l'extrémité arrière de celle-ci, déplaçable en translation par des moyens de commande tels qu'une came et un moteur électrique.

4. Dispositif selon l'une quelconque des revendications précédentes, caractérisé en ce que la perche est constituée en au moins deux tronçons (42, 44) raboutables l'un à l'autre, le tronçon avant étant disponible en plusieurs longueurs.

5. Dispositif selon l'une quelconque des revendications précédentes, caractérisé en ce que le guide d'éclairage de la zone de la plaque occultée par les moyens déflecteurs de l'endoscope comprend une fibre optique placée à la partie inférieure de la perche, associée à un organe déflecteur fixe.

### Claims

1. A device for inspecting the tubular plate of a steam generator comprising parallel banks of tubes (16, 18) contained in an enclosure having at least one access hole situated opposite an interval between two adjacent ones of said banks, said device comprising an alongated member (10) having a cross section which transversal size is less than said interval, insertable through the access hole, comprising a light guide (14) and an endoscope (12), and terminated by a distal end having orientable light deflection means associated with said endoscope and with said guide for illuminating and observing a same zone of the plate, characterized in that the light deflection means (20, 26) are located inside and along said elongated member, substantially one above the other, the light deflection means associated with the guide being located at a greater distance from the plate than the light deflection means associated with the endoscope and further comprising a fixed lighting guide (72, 74) for illuminating the zone of the plate in which the light beam from the light deflection means (24) associated with the guide is cut by the light deflection means (20) associated with the endoscope (12).

2. A device according to claim 1, characterized in that the light deflection means (20, 24) are formed with mirrors carried by barrels rotatable within the elongated member about parallel axes, simultaneously driven in rotation by control means traversing the elongated member.

3. A device according to claim 2, characterized in that the control means include a rod slidably mounted inside the elongated member, movable in translation by control means such as a cam and an electric motor.

4. A device according to any one of the precedent claims, characterized in that the elongated member comprises at least two sections (42, 44) connectable in end to end relation, the front section being allowable with different lengths.

5. A device according to any one of the present claims, characterized in that the fixed lighting guide for illuminating the zone of the plate in which the liquid beam is cut by the light deflection means associated with the endoscope comprises an optical fiber located in the inferior part of the elongated member, associated to a fixed light deflexion means.

### Patentansprüche

1. Vorrichtung zur Betrachtung des Rohrbodens eines Dampfgenerators mit parallelen Rohrlagen (16, 18) in einem Behälter mit wenigstens einem Zugang gegenüber dem Zwischenraum zwischen zwei benachbarten Lagen, wobei die Vorrichtung einen Galgen (10) aufweist, dessen Querabmessung kleiner als der Zwischenraum ist, der durch den Zugang eingesetzt werden kann, der einen Lichtleiter (14) und eine Endoskop (12) enthält und der durch einen Kopf beendet wird, der mit ausrichtbaren Ablenkmitteln versehen ist, die dem Endoskop und dem Kanal zugeordnet sind, um eine Beleuchtung und Beobachtung ein- und derselben Zone des Bodens zu gestatten, dadurch gekennzeichnet, daß die Ablenkmittel (20, 24) in der Dickenerstreckung des Galgens im wesentlichen übereinander angeordnet sind, wobei die Ablenkmittel des Lichtleiters vom Boden weiter entfernt sind als die Ablenkmittel des Endoskops und durch einen feststehenden Lichtleiter (72, 74) vervollständigt sind zur Beleuchtung der Bodenzone, bei der das von den Ablenkmitteln (24) des Lichtleiters kommende Lichtbündel durch die Ablenkmittel (20) des Endoskops (20) verdunkelt ist.

2. Vorrichtung nach Anspruch 1, dadurch gekennzeichnet, daß die Ablenkmittel (20, 24) durch Spiegel gebildet sind, die durch um parallele Achsen im Galgen drehbare Trommeln getragen werden, die durch den Galgen durchquerende Steuermittel gleichzeitig gedreht werden.

3. Vorrichtung nach Anspruch 2, dadurch gekennzeichnet, daß die Steuermittel eine im Galgen verschiebbar gelagerte Stange aufweisen, die am hinteren Ende des Galgens aus diesem herausragen und durch Steuermittel, etwa einen Nocken oder Elektromotor, translatorisch verschiebbar ist.

4. Vorrichtung nach einem der vorhergehenden Ansprüche, dadurch gekennzeichnet, daß der Galgen aus wenigstens zwei aneinanderfügbaren Abschnitten (42, 44) besteht, wobei der vordere Abschnitt in verschiedenen Längen zur Verfügung steht.

5. Vorrichtung nach einem der vorhergehenden Ansprüche, dadurch gekennzeichnet, daß der Lichtleiter zur Beleuchtung der durch die Ablenkmittel des Endoskops verdunkelten Bodenzone eine optische Faser aufweist, die am Unterteil des Galgens angeordnet und mit einem feststehenden Ablenkorgan verbunden ist.

# FIG.1.

FIG.2.

FIG.3.

42

14

62 70

64

60

3

72

66

68

54

12

10

44

14

24

48

12

72
74

20

56

46

54

12

38

72

54

50

52

0 125 186

# FIG.4.